# FASCICULE DE BREVET EUROPEEN

(11) **EP 2 930 130 B1**
(45) Date de publication et mention de la délivrance du brevet: **20.09.2017**
(21) Numéro de dépôt: 15163232.0
(22) Date de dépôt: 10.04.2015
(51) Int. Cl.: B65G 69/00

(54) **DISPOSITIF DE CALE D'IMMOBILISATION DE VEHICULE**
KEILVORRICHTUNG ALS WEGFAHRSPERRE FÜR FAHRZEUG
WEDGE DEVICE FOR IMMOBILISING A VEHICLE

(30) Priorité: 10.04.2014 FR 1453221
(43) Date de publication de la demande: 14.10.2015
(73) Titulaire: GPsystems, 82790 Saint-Sornin-Leulac (FR)
(72) Inventeur: PENOT, Etienne, 87290 SAINT-SORNIN-LEULAC (FR); VERGE, Jean-Paul, 69006 LYON (FR)
(74) Mandataire: Chaillot, Geneviève

(56) Documents cités:
- WO-A1-2013/136031
- US-A- 5 896 957
- US-A1- 2005 133 315

## Description

L'invention a pour objet un dispositif de cale d'immobilisation de véhicule, en particulier pour des camions, lors de leur chargement ou de leur déchargement.

Les camions sont habituellement chargés/déchargés par des caristes, qui entrent à l'intérieur d'un camion garé devant un quai de chargement/déchargement pour charger ou décharger des marchandises. Bien qu'il existe des systèmes de feux indiquant au conducteur du camion lorsque l'opération du cariste à l'intérieur du camion est terminée, il arrive parfois que le camion parte avant que le cariste ne soit sorti du camion, ce qui provoque des accidents.

De plus, il peut être utile de caler le camion pour éviter qu'il ne bouge trop pendant les allers et retours du cariste dans le camion.

On connaît des systèmes de calage perfectionnés, tels que le système Calematic, objet du brevet français 9806769/FR2779137 au nom du présent déposant, dans lequel la cale sort du sol actionnée par un vérin commandé automatiquement.

On connaît également des systèmes de calage dans lesquels une ou plusieurs roues du camion sont calées par une cale latérale. Un tel système de calage est décrit dans la demande internationale de brevet PCT WO2010/090884.

D'une manière générale, dans les systèmes connus, la cale peut être placée dans une position dite d'arrêt, dans laquelle elle assure la fonction de calage et elle est maintenue par des moyens de solidarisation, et une position de non-utilisation, dans laquelle elle ne s'oppose plus au mouvement du camion et n'assure donc plus la fonction de calage. Le passage d'une position à l'autre peut se faire de manière automatisée, par exemple par l'intermédiaire d'un actionneur tel qu'un vérin, ou de manière manuelle, soit directement par un opérateur se saisissant de la cale et la déplaçant, soit indirectement par exemple par l'intermédiaire d'un levier manuel comme décrit dans la demande PCT WO2010/090884 mentionnée ci-dessus, mais après actionnement des moyens de solidarisation pour libérer la cale de la position d'arrêt. La document WO 2013/136 031 divulgue un dispositif de cale d'immobilisation de véhicule selon le préambule de la revendication 1. L'inconvénient des systèmes dits manuels, à savoir dans lesquels la cale est déplacée de manière manuelle entre la position d'arrêt et la position de non-utilisation, est, entre autres, qu'entre le moment où le camion arrive sur le quai et celui où il en repart, le poids qu'il transporte a changé, ce qui a une influence sur la position des roues du camion à l'arrêt. Ainsi, une cale placée contre la roue d'un camion à l'arrêt vide peut se retrouver coincée par le pneu du même camion chargé, et donc difficile voire impossible à déplacer de la position d'arrêt à la position de non-utilisation, notamment car il n'est plus possible d'actionner les moyens de solidarisation pour qu'ils libèrent la cale.

On entend par l'expression « placée manuellement » que la cale est placée par un opérateur dans l'une des positions d'arrêt et de non-utilisation d'une manière directement manuelle, l'opérateur saisissant à la main la cale ou la partie d'arrêt pour la déplacer, ou d'une manière indirectement manuelle, l'opérateur actionnant, par force humaine, un actionneur manuel tel qu'un levier, un volant, etc. De manière analogue, la partie de liaison, qui sera mentionnée ci-après, est désolidarisable de la structure de support de cale d'une manière directement manuelle ou indirectement manuelle.

Le problème ci-dessus ne se pose pas dans les systèmes avec déplacement automatisé de la cale, puisque les actionneurs peuvent développer une force suffisante pour aller à l'encontre de la pression exercée par la roue, de telle sorte que la cale n'est en réalité jamais coincée.

Un exemple d'un tel système est divulgué dans le brevet américain US 5,896,957, où la cale est formée par une poutre en L reliée de façon pivotante à un support par une charnière d'axe vertical et dont le pivotement est commandée par un vérin. La cale n'y est donc pas manuelle.

La demande de brevet américain US 2005/0133315 A1 décrit un autre exemple d'un tel système avec déplacement automatisé de la cale.

Dans cet exemple, le dispositif de cale comprend un chariot mobile en translation le long d'un support par l'intermédiaire d'un système d'entraînement, ce dernier permettant également de bloquer le chariot en place sur le support. Le système d'entraînement comprend un moteur, une chaîne reliée au chariot et entraînée par un pignon de chaîne. Ainsi, un blocage du déplacement de la chaîne permet le blocage en place du chariot sur le support.

Le dispositif de cale comprend en outre une partie d'arrêt reliée au chariot de façon à pouvoir pivoter autour d'un axe vertical. La partie d'arrêt est déplacée de la position de non-utilisation à la position d'arrêt par avance du chariot, sous l'action du système d'entraînement, pour que la partie d'arrêt vienne au contact de la roue du véhicule et jusqu'à ce que la partie d'arrêt ait été amenée à pivoter, par la roue, contre une butée solidaire du chariot.

Le calage de la roue est donc obtenu par butée de la partie d'arrêt contre une butée solidaire du chariot et par blocage du chariot sur le support à l'aide du système d'entraînement. Lorsque l'on souhaite libérer le véhicule, le chariot est déplacé à l'opposé du quai, jusqu'à venir se loger dans un boîtier dont un bord fera pivoter la partie d'arrêt pour la faire sortir du chemin de la roue.

Là encore, la cale n'y est donc pas manuelle et, comme on pourra le voir ci-après, la partie d'arrêt n'y est pas déplaçable vis-à-vis de la roue, à partir de la position d'arrêt et alors que le chariot est encore bloqué en position sur le support, dans la direction correspondant à la direction de la pression exercée par la roue.

Pour résoudre le problème décrit ci-dessus, le déposant a conçu un dispositif de cale d'immobilisation simple, facile à installer et peu coûteux, permettant de placer manuellement la cale, soit directement, soit indirectement, dans une position de non-utilisation même lorsque la cale est coincée et ne peut plus être placée manuellement dans la position de non-utilisation, du fait que la position de la roue calée a changé en raison de la différence de chargement du camion entre son arrivée au quai et son départ de celui-ci.

La présente invention a ainsi pour objet un dispositif de cale d'immobilisation d'un véhicule dans un emplacement de chargement/déchargement, selon la revendication 1. Ledit déplacement de la partie d'arrêt peut se faire par déplacement de la structure de support de cale par rapport à la roue, par exemple par translation ou par rotation, auquel cas la partie d'arrêt est déplacée d'un seul tenant avec la partie de liaison, ou par déplacement de la partie d'arrêt par rapport à la partie de liaison, cette dernière restant, avec la structure de support de cale, immobile par rapport à la roue.

La structure de support de cale peut être un ensemble poutre relié à un support destiné à être fixé au sol.

De préférence, la partie de liaison porte des moyens de solidarisation par arc-boutement sur l'ensemble poutre, constituant les moyens de solidarisation de la partie de liaison sur l'ensemble poutre, pour maintenir la cale immobile par rapport à l'ensemble poutre lorsqu'une pression parallèle à la direction longitudinale de l'ensemble poutre et orientée dans le sens d'arc-boutement est exercée sur la partie d'arrêt, bloquant ainsi en position le dispositif de cale d'immobilisation.

En pratique, le sens d'arc-boutement correspond au sens allant à l'opposé du quai de chargement. Ainsi, dans le cas où le dispositif de cale d'immobilisation est disposé de telle sorte que la région d'extrémité arrière de l'ensemble poutre se trouve côté quai, alors le sens d'arc-boutement sera le sens orienté de la région d'extrémité arrière vers la région d'extrémité avant de l'ensemble poutre.

La présente invention n'est cependant pas limitée à un mode particulier de solidarisation de la cale sur la structure de support de cale. Par exemple, elle peut être appliquée aux systèmes dans lesquels la partie de liaison est rendue solidaire de la structure de support par l'engagement d'une dent mobile dans une crémaillère, le désengagement de la dent étant obtenu par l'actionnement d'un levier de commande manuelle.

Selon un premier mode de réalisation particulier de la présente invention, l'ensemble poutre est déplaçable en translation par rapport au support dans la direction longitudinale de l'ensemble poutre, étant le cas échéant prévus des moyens de limitation du déplacement de l'ensemble poutre lors de l'application de ladite pression par une roue, la désolidarisation de la partie de liaison vis-à-vis de l'ensemble poutre étant obtenue par translation de l'ensemble poutre suivant la direction longitudinale de l'ensemble poutre et dans le sens d'arc-boutement.

Lesdits moyens de limitation du déplacement de l'ensemble poutre peuvent comprendre des moyens pour solliciter en permanence l'ensemble poutre dans le sens opposé au sens d'arc-boutement.

De préférence, lesdits moyens de limitation du déplacement de l'ensemble poutre comprennent au moins un ressort de compression monté entre une partie fixe solidaire du support et une plaque de poussée solidaire de l'ensemble poutre, de telle sorte que le ou chaque ressort prend appui sur la partie fixe et exerce sur la plaque de poussée une poussée dans un sens opposé au sens d'arc-boutement. Cet au moins un ressort forme des moyens de sollicitation mentionnés ci-dessus.

Le dispositif de cale d'immobilisation peut comprendre en outre des moyens de commande du déplacement en translation de l'ensemble poutre pour la désolidarisation de la partie de liaison, lesquels moyens de commande comprennent avantageusement, le cas échéant, une tige filetée à l'intérieur de l'ensemble poutre qui consiste en une poutre creuse, laquelle tige s'étend dans la direction longitudinale de l'ensemble poutre, est montée de façon à pouvoir tourner autour de son axe sous l'action de moyens d'entraînement en rotation et passe à travers ladite plaque de poussée, un coulisseau muni d'un trou taraudé étant enfilé sur la tige pour venir en appui contre la plaque de poussée, côté opposé au ou aux ressorts, et bloqué en rotation de telle sorte qu'une rotation de la tige dans un sens donné entraîne un déplacement en translation du coulisseau, et donc de l'ensemble poutre, à l'encontre de l'action du ou des ressorts.

Selon un second mode de réalisation de la présente invention, la partie d'arrêt de la cale est reliée à la partie de liaison à rotation libre selon un axe de rotation qui est vertical lorsque la partie d'arrêt est en position d'arrêt, la partie d'arrêt étant déplaçable entre la position d'arrêt et la position de non-utilisation par rotation autour dudit axe de rotation, étant prévus des moyens de blocage sélectif de la partie d'arrêt dans la position d'arrêt.

Lesdits moyens de blocage de la partie d'arrêt dans la position d'arrêt comprennent avantageusement des moyens de blocage par serrage de la partie d'arrêt contre la partie de liaison.

Le dispositif de cale d'immobilisation selon la présente invention peut être destiné à immobiliser un véhicule dans un emplacement de chargement/déchargement avec l'arrière du véhicule au contact d'un quai de chargement/déchargement, notamment par l'intermédiaire d'un niveleur de quai et de butoirs, et peut comprendre à cet effet des moyens d'application de poussée pour appliquer en permanence sur la roue, par l'intermédiaire de la cale, une poussée permettant à l'arrière du véhicule d'être en appui sur ledit quai tout au long d'une opération de chargement/déchargement, et non en simple contact avec ce dernier.

L'application d'une telle poussée permet au véhicule d'être « pris en sandwich » entre la cale et le quai et d'être ainsi immobilisé de façon certaine dans les deux sens, pour une plus grande sécurité des opérateurs durant une opération de chargement/déchargement.

Les moyens d'application de poussée peuvent être configurés pour appliquer une poussée d'une valeur minimale de 1000N, ce qui permet de garantir un tel appui et non un simple contact.

Selon une mise en oeuvre particulière, les moyens d'application de poussée comprennent au moins un ressort de compression monté entre une partie fixe solidaire du support et une plaque de poussée solidaire de l'ensemble poutre, de telle sorte que le ou chaque ressort prend appui sur la partie fixe et exerce sur la plaque de poussée une poussée dans un sens orienté vers le quai de chargement/déchargement, lesquels moyens d'application de poussée constituant ainsi, le cas échéant, également les moyens de limitation du déplacement de l'ensemble poutre.

Est également divulgué par la présente un dispositif de cale d'immobilisation d'un véhicule dans un emplacement de chargement/déchargement avec l'arrière du véhicule au contact d'un quai de chargement/déchargement, notamment par l'intermédiaire d'un niveleur de quai et de butoirs, lequel dispositif comprend un bâti destiné à être fixé au sol, au voisinage de l'emplacement de chargement/déchargement, et une cale ayant une partie d'arrêt portée par une partie de liaison au bâti de telle sorte que lorsque la partie de liaison est reliée au bâti, la partie d'arrêt est apte à être placée dans une position dite d'arrêt dans laquelle elle s'étend dans l'emplacement de chargement/déchargement pour former un arrêt contre lequel vient buter une roue d'un véhicule qui a été placé dans l'emplacement de chargement/déchargement, étant en outre prévus des moyens de blocage de la position de la cale sur le bâti de façon à ainsi empêcher le véhicule de se déplacer à l'encontre de la partie d'arrêt, le dispositif de cale d'immobilisation étant caractérisé par le fait qu'il comprend des moyens d'application de poussée pour appliquer en permanence sur la roue, par l'intermédiaire de la cale, une poussée permettant à l'arrière du véhicule d'être en appui sur ledit quai tout au long d'une opération de chargement/déchargement, et non en simple contact avec ce dernier.

Les caractéristiques techniques mentionnées ci-dessus en liaison avec les premier et second modes de réalisation du dispositif selon la présente invention peuvent être combinées avec le dispositif défini au paragraphe précédent. Ainsi, par exemple, les moyens de blocage de la position de la cale pourront être formés par les moyens de solidarisation de la partie de liaison sur une structure de support de cale.

Pour mieux illustrer l'objet de la présente invention, on va en décrire ci-après, à titre indicatif et non limitatif, plusieurs modes de réalisation particuliers avec référence aux dessins annexés.

Sur ces dessins :
- la Figure 1 est une vue en perspective d'un premier mode de réalisation du dispositif de cale d'immobilisation selon la présente invention, la cale étant en position d'arrêt ;
- la Figure 2 est une vue en perspective éclatée de la cale selon ledit premier mode de réalisation, vue de dessus ;
- les Figures 3 et 4 sont des vues en perspective de la cale selon ledit premier mode de réalisation, vue respectivement de dessous et de dessus, à l'état assemblé ;
- les Figures 5 et 6 sont des vues de côté du dispositif de la Figure 1, en position respectivement partie de liaison arc-boutée sur la poutre et cale retirée après désolidarisation de la partie de liaison ;
- la Figure 7 est une vue de dessus d'une partie de l'ensemble poutre, d'une roue et de la cale dans la position d'arc-boutement de la Figure 6 ;
- la Figure 8 est une vue de détail de la Figure 7, montrant plus précisément la cale ;
- la Figure 9 est une vue en perspective d'un dispositif de cale d'immobilisation selon une variante du premier mode de réalisation de la présente invention ;
- la Figure 10 est une vue de dessus du dispositif de la Figure 9 ;
- la Figure 11 est une vue en coupe longitudinale verticale du dispositif de la Figure 9, selon la ligne XI-XI de la Figure 10 ;
- les Figures 12 et 13 sont des vues en perspective d'une cale du dispositif de la Figure 9, respectivement en position d'arrêt et en position de non-utilisation ; et
- la Figure 14 est une vue d'un dispositif de cale d'immobilisation selon un second mode de réalisation de la présente invention, seule une partie du bâti ayant été représentée.

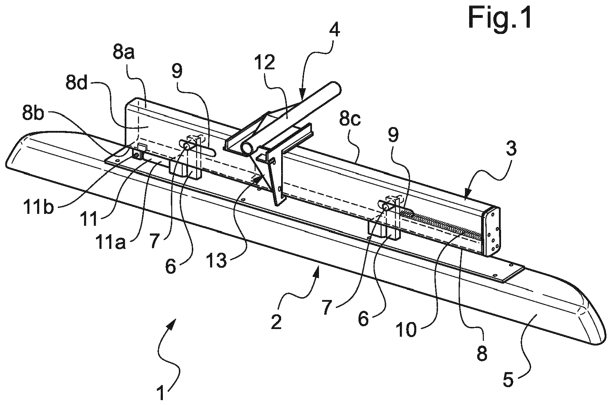

Si l'on se réfère à la Figure 1, on peut voir qu'un dispositif de cale d'immobilisation 1 selon le premier mode de réalisation de la présente invention comprend un support 2, un ensemble poutre 3 relié au support 2 et une cale 4 disposée sur l'ensemble poutre 3.

Le support 2 comprend un guide-roues 5 classique, qui sera fixé au sol perpendiculairement à un quai de chargement et qui sert à guider les roues d'un camion lorsque celui-ci recule vers le quai de chargement.

Deux plots verticaux 6, de section transversale rectangulaire, s'étendent à partir de la face supérieure du guide-roues 5. Un téton 7 est prévu sur chaque grande face de chaque plot 6, dans la région d'extrémité supérieure du plot 6, et les tétons 7 s'étendent horizontalement et perpendiculairement à la direction longitudinale du guide-roues 5.

L'ensemble poutre 3 consiste en une poutre creuse 8 de section transversale rectangulaire ayant des faces supérieure 8a et inférieure 8b opposées et deux faces latérales 8c et 8d, la face latérale 8c étant côté camion.

La poutre 8 comprend une région d'extrémité avant et une région d'extrémité arrière. Dans un souci de concision, les expressions « avant de la poutre 8 » et « arrière de la poutre 8 » seront utilisées pour la région d'extrémité respectivement avant et arrière. Dans l'exemple représenté, l'arrière de la poutre 8 est côté quai, à droite de la Figure 1.

Sur chaque face latérale 8c, 8d sont pratiquées deux lumières rectilignes horizontales 9. A chaque plot 6 correspond une paire de deux lumières 9 chacune sur une face latérale respective 8c, 8d. Les tétons 7 de chaque plot 6 s'étendent à travers la lumière 9 respective, de telle sorte que la poutre 8 est montée sur le support 2 d'une manière lui permettant d'être déplacée en translation, dans les deux sens, dans la direction longitudinale de la poutre 8, qui est ici parallèle à la direction longitudinale du guide-roues 5.

Le déplacement en translation de la poutre 8 dans le sens d'arc-boutement, à savoir le sens orienté de l'arrière vers l'avant de la poutre 8, est limité par des moyens de limitation formés par un ressort de compression 10 placé à l'intérieur de la poutre 8 et dont une première extrémité est solidaire du plot 9 côté arrière de la poutre 8 et dont l'autre, seconde, extrémité est solidaire de la face d'extrémité arrière de la poutre 8. Le ressort 10 est précontraint, de telle sorte qu'il ne peut être comprimé davantage que si on lui applique une force supérieure à sa valeur de compression maximum.

Est également prévu un vérin double effet 11 dont le corps 11a est solidaire du support 2, ici du plot 6 côté avant de la poutre 8, et dont la tête 11b est solidaire de l'avant de la poutre 8. Le vérin 11 est disposé pour que sa tige soit parallèle à la direction de liberté en translation de la poutre 8 par rapport au support 2. On comprend à l'évidence qu'un mouvement d'extension ou de rétraction de la tige du vérin 11 permet d'obtenir une translation de la poutre 8 respectivement dans le sens d'arc-boutement et dans le sens opposé.

Par exemple, le ressort 10 ou le vérin 11 peut être précontraint de 2000 à 5000 N.

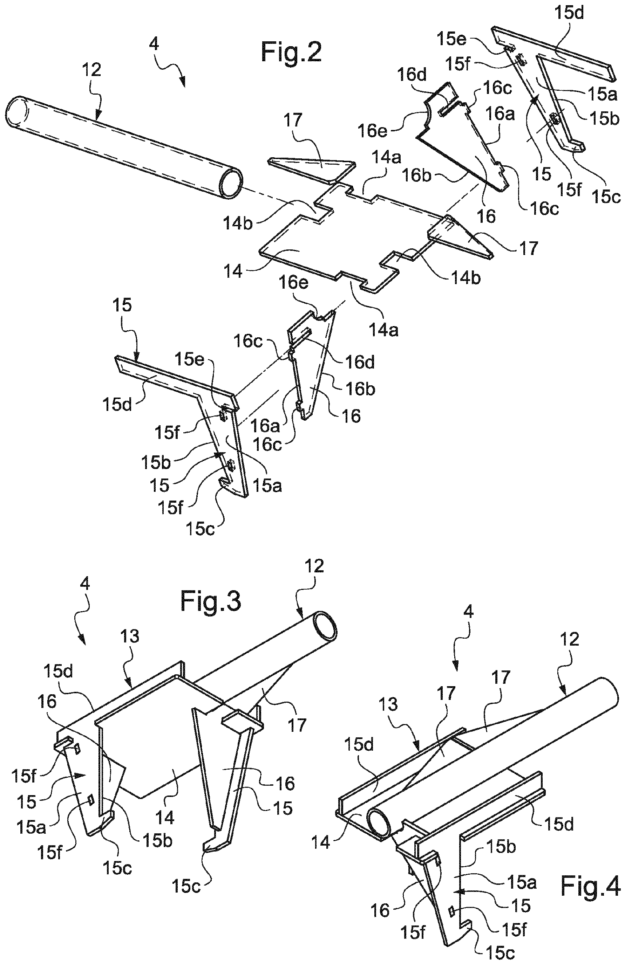

On va maintenant décrire plus précisément la structure de la cale 4 avec référence aux Figures 2 à 4.

La cale 4 comprend une partie d'arrêt 12 et une partie de liaison 13.

Dans le mode de réalisation représenté, la partie d'arrêt 12 consiste en une barre cylindrique réalisée en titane ou alliage de titane.

La partie de liaison 13 comprend une platine 14, se présentant sous la forme d'une plaque rectangulaire plate, deux ailes 15 et deux demi-cavaliers de renfort 16 et deux goussets 17, ces pièces étant encastrées les unes dans les autres, par la disposition de découpes prévues à cet effet, puis soudées.

Les ailes 15 se présentent chacune sous la forme d'une plaque plate ayant une partie centrale 15a présentant d'un côté un bord vertical 15b, dit de contact, et de l'autre côté un bord incliné, une partie inférieure formant un retour 15c perpendiculaire au bord de contact 15b et à l'opposé dudit bord inclinée, et une partie supérieure 15d en forme de bande allongée. Une échancrure 15e est pratiquée au sommet du bord incliné, au-dessous de la partie supérieure 15d dont une portion s'étend au-delà du bord incliné, et deux ouvertures rectangulaires 15f sont pratiquées dans la partie centrale 15a.

Les demi-cavaliers 16 se présentent chacun sous la forme d'une plaque de forme globalement triangulaire, ayant un bord vertical 16a et un bord incliné 16b opposés l'un à l'autre. Le bord vertical 16a porte deux pattes 16c et une échancrure rectangulaire 16d, dans la région supérieure dudit bord 16a. En partie supérieure du demi-cavalier 16 le bord vertical 16a est relié au bord incliné 16b par un bord supérieur présentant une partie 16e suivant un arc de cercle de rayon globalement égal au rayon de la surface cylindrique extérieure de la barre 12.

Ainsi, dans l'état assemblé de la partie de liaison 13, chaque aile 15 est placée dans une découpe 14a correspondante de la platine 14, une partie de la platine 14 venant se loger dans l'échancrure 15e et la partie supérieure 15d s'étendant sur la face supérieure de la platine 14 et sur toute la longueur cette dernière, et chaque demi-cavalier 16 est encastré à la fois dans l'aile 15 correspondante, par encastrement des pattes 16c dans les ouvertures 15f correspondante, et dans la platine 14, par encastrement de la partie supérieure du demi-cavalier 16 dans une découpe 14b correspondante de la platine 14, et les différentes pièces sont soudées. Ensuite, la barre 12 est placée sur la platine 14, en prenant appui sur la partie en arc de cercle 16e de chaque demi-cavalier 16, puis soudée sur la partie de liaison 13 avec une partie de la barre 12 se projetant à partir de la partie de liaison 13. Enfin, les goussets 17 sont chacun soudés le long d'un bord à la barre 12 et le long d'un autre bord à un demi-cavalier 16.

Dans l'état assemblé, les parties centrales 15a des ailes 15 sont parallèles l'une à l'autre, les bords verticaux 15b sont perpendiculaires à la platine 14, les retours 15c sont dirigés l'un vers l'autre, et les bords verticaux 15b sont écartés l'un de l'autre sur une distance, considérée suivant la direction longitudinale de la barre 12, au moins légèrement supérieure à la largeur de la poutre 8.

Ainsi, comme on peut le voir sur la Figure 1, la partie de liaison 13 peut être disposée sur la poutre 8 avec chaque aile 15 en regard d'une face latérale 8c, 8d et son retour 15c sous la face inférieure 8b.

Lorsque la cale 4 est disposée sur la poutre 8 sans qu'aucune force ne soit appliquée sur la barre 12, les bords 15b sont verticaux et perpendiculaires aux et à proximité des faces latérales 8c, 8d, et la barre 12 s'étend perpendiculairement à la poutre 8.

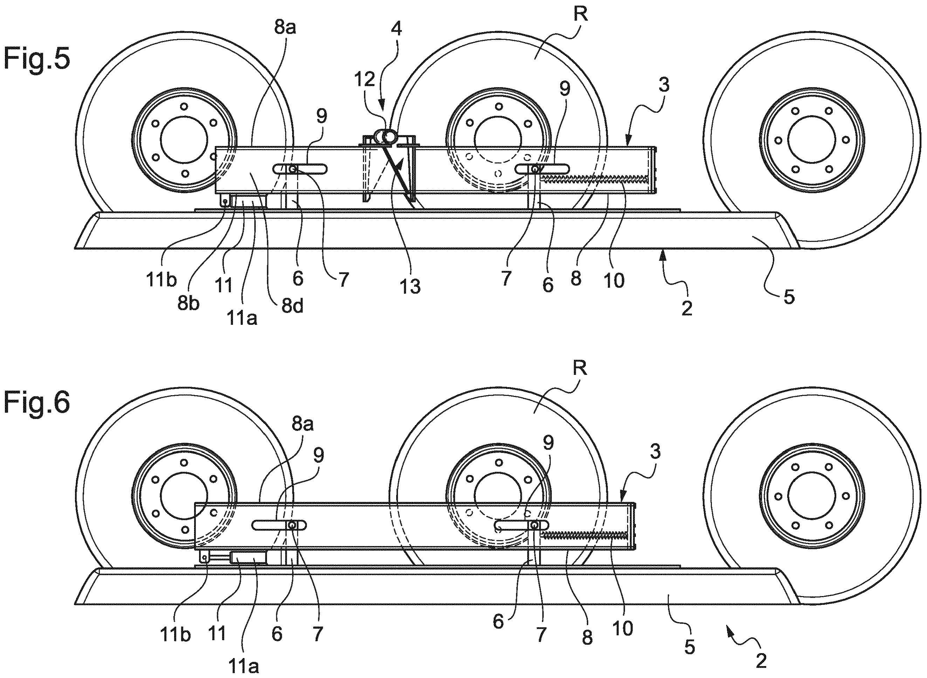

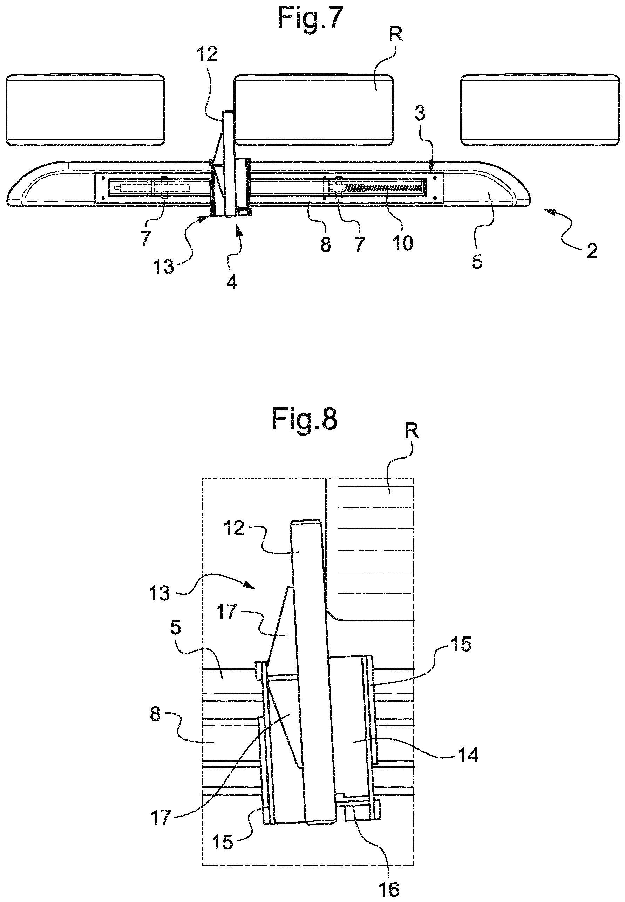

On va décrire maintenant le fonctionnement du dispositif 1 selon le mode de réalisation avec référence aux Figures 5 à 8, un camion, dont seules les roues sont représentées, étant venu se placer le long du guide-roues 5 en vue d'une opération de chargement ou de déchargement.

Une fois le camion en stationnement, un opérateur dispose la cale 4 devant l'une des roues, la roue R du centre dans l'exemple représenté, de la manière décrite ci-dessus, et déplace la cale 4 le long de la poutre 8 pour mettre en contact la barre 12 et la bande de roulement de la roue R.

On souligne ici qu'il est particulièrement avantageux que le support 2, l'ensemble poutre 3 et la cale 4 soient agencés et dimensionnés pour que la barre 12 se situe à la même hauteur que l'essieu du camion qu'il s'agit de caler.

Si le camion cherche à se déplacer à l'encontre de la barre 12, du fait d'un mauvais actionnement du frein à main ou par suite de l'opération de chargement du camion, la roue R appliquera une pression parallèle à la direction longitudinale de la poutre 8 et orientée en direction de l'avant de la poutre 8, ce qui aura pour effet d'amener la partie de liaison 13 à se déplacer dans le sens allant vers l'avant de la poutre 8, à savoir le sens d'arc-boutement, et à s'arc-bouter sur la poutre 8 par contact des bords verticaux 15b contre les faces latérales 8c, 8d, comme représenté sur les Figures 5, 7 et 8.

On souligne ici que les bords des ailes 15 qui viendront en contact avec la poutre 8 peuvent être avantageusement revêtus de carbure de tungstène, afin d'augmenter leur coefficient de frottement entre la partie de liaison 13 et la poutre 8.

La cale 4 sera donc automatiquement bloquée en position sur la poutre 8 par solidarisation de la partie de liaison 13 sur la poutre 8, elle-même maintenue immobile par l'action conjuguée du ressort 10 et du vérin 11. La cale 4 ne peut alors pas être déplacée manuellement par l'opérateur.

Dans le cas où la roue R exerce sur la barre 12 une force d'une grandeur supérieure à la valeur de la précontrainte du ressort 10, la poutre 8 pourra se déplacer légèrement en translation dans le sens d'arc-boutement.

A la fin de l'opération de chargement/déchargement, l'opérateur peut actionner le vérin 11, par tout moyen approprié connu, tel qu'une pédale, une télécommande, etc., pour faire sortir la tige et ainsi déplacer la poutre 8 en translation dans le sens d'arc-boutement, ce qui permet de réduire la pression exercée par la roue R sur la barre 12 et ainsi de pouvoir facilement retirer la barre 12, en d'autres termes la placer dans une position de non-utilisation, pour laisser partir le camion du quai de chargement, comme illustré par la Figure 6. Le ressort 10 permet de garantir le retour à sa position initiale de la poutre 8, avec de préférence un amortissement assuré par le vérin 11.

On souligne ici que le ressort 10 et le vérin 11 peuvent être configurés pour appliquer en permanence sur la poutre 8 une poussée dans le sens opposé au sens d'arc-boutement, de façon à appliquer sur la roue du véhicule une poussée d'une valeur suffisante pour s'assurer que l'arrière du véhicule est en appui contre un quai de chargement.

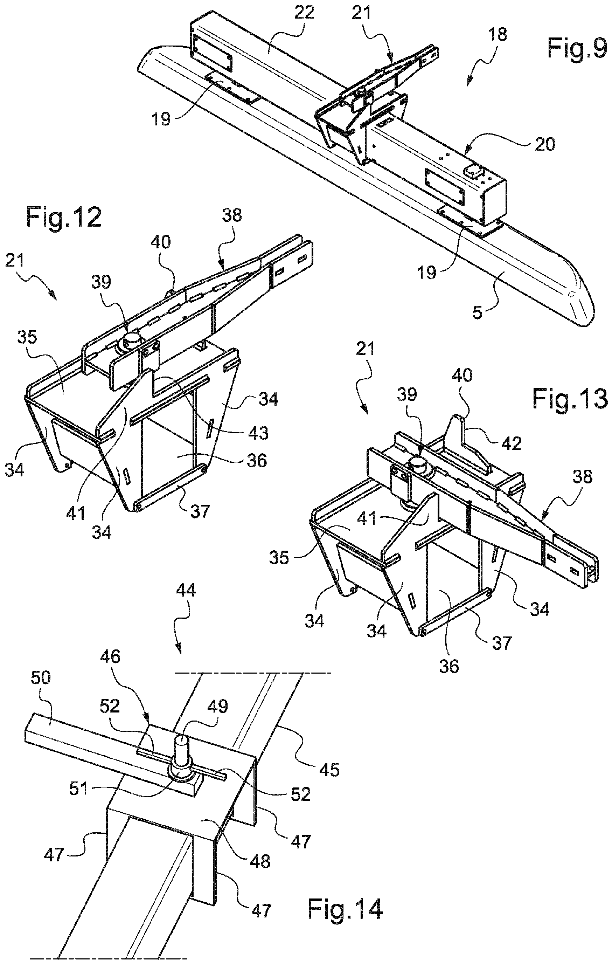

Si l'on se réfère maintenant à la Figure 9, on peut voir qu'un dispositif de cale d'immobilisation 18 selon une variante du premier mode de réalisation de la présente invention comprend deux platines de fixation 19 fixées par vissage à un guide-roues 5, un ensemble poutre 20 et une cale 21.

Cette variante repose sur le même principe de solidarisation de la cale 21 par arc-boutement sur l'ensemble poutre 20, mais diffère du premier mode de réalisation par, d'une part, les moyens permettant de limiter le déplacement de l'ensemble poutre 20 dans le sens d'arc-boutement et de désolidariser la cale 21 de l'ensemble poutre 20, et d'autre part la structure de la cale 21.

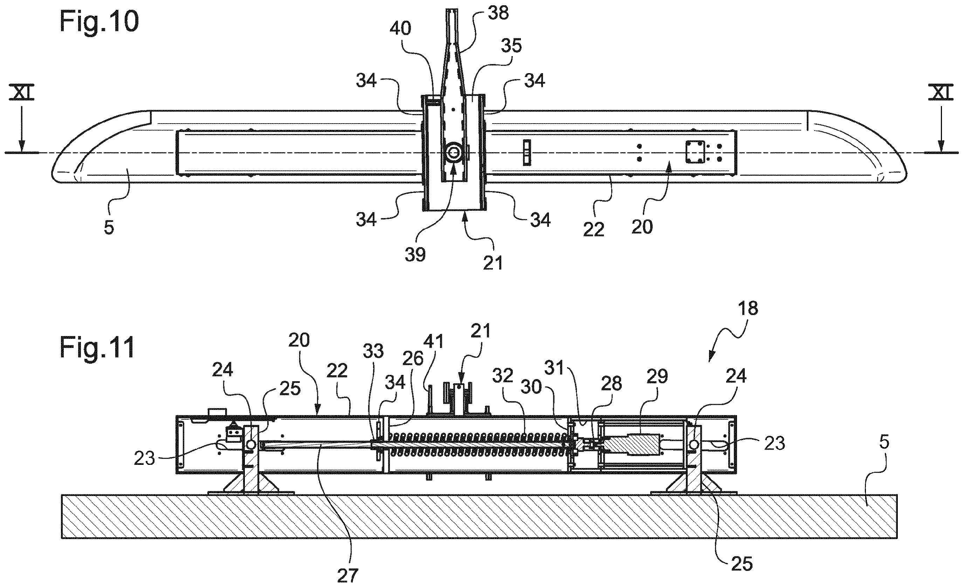

L'ensemble poutre 20 consiste en une poutre creuse 22 présentant, à l'avant et à l'arrière, deux lumières 23 (Figure 11) rectilignes horizontales dans chacune desquelles s'étend un téton 24 porté par un plot 25 solidaire d'une platine de fixation 19.

Si l'on se réfère maintenant à la Figure 11, on peut voir qu'une plaque dite de poussée 26, qui comporte un trou traversant en son centre, s'étend en travers de l'intérieur de la poutre 22 et est solidaire de celle-ci.

A travers ledit trou traversant passe une tige filetée 27 dont une première région d'extrémité, dite libre, est supportée à rotation par un palier solidaire du plot 25 côté avant de la poutre 22, tandis que l'autre extrémité est accouplée, par l'intermédiaire d'un accouplement 28, à l'arbre de sortie d'un moteur rotatif 29 représenté schématiquement. Avant l'accouplement 28, la tige filetée 27 passe à travers un trou traversant central d'une plaque d'appui 30 solidaire d'une structure porteuse 31, formées de plaques soudées les unes aux autres, qui est fixée au plot 25 et qui porte le moteur 29.

Un ressort de compression 32 est monté autour de la tige filetée 27, entre la plaque d'appui 30 et la plaque de poussée 26, de façon à prendre appui sur la plaque d'appui 30 pour exercer une poussée sur la plaque de poussée 26.

Le ressort 32 est précontraint pour exercer en permanence une poussée d'une valeur minimale de 1000N, ce qui permet d'appliquer sur la roue du véhicule une poussée suffisante pour s'assurer que l'arrière du véhicule est en appui contre un quai de chargement.

Un coulisseau 33 est enfilé, via un trou traversant central taraudé, sur la tige filée 27 pour venir en appui, par une face, contre la plaque de poussée 26, sur le côté opposé au ressort 32. Le coulisseau 33 est bloqué en rotation par une plaque rectangulaire 34 de forme complémentaire à l'intérieur de la poutre 22 et solidaire du coulisseau 33.

On comprend donc qu'une rotation de la tige filetée 27 dans un sens ou dans l'autre, sous l'action du moteur 29 lui-même commandé par tout moyen approprié par l'opérateur, permet de déplacer en translation le coulisseau 33 dans un sens ou dans l'autre, à l'encontre ou non de l'action du ressort 32.

Si l'on se réfère maintenant aux Figures 12 et 13, on peut voir que la cale 21 selon cette variante de réalisation est une pièce mécano-soudée sur le même principe d'encastrement que la cale 4. Les différentes découpes ne seront donc pas décrites en détail.

On peut toutefois souligner que la cale 21 comprend quatre ailes 34, et non uniquement deux ailes 15. Chaque paire d'ailes 34, d'un même côté d'une platine centrale 35, est formée par une même pièce présentant une ouverture centrale rectangulaire 36 de dimension légèrement supérieure à celle de la poutre 22 pour permettre à la cale 21 d'être enfilée sur la poutre 22 et de s'arc-bouter sur cette dernière comme décrit pour la cale 4, l'extrémité inférieure de deux ailes 34 étant reliées par une barre 37 afin d'empêcher que l'on désengage la cale 21 de la poutre 22 en la soulevant.

La partie d'arrêt de la cale 21 consiste en une barre d'arrêt 38 formée de plaques mécano-soudées et dont une extrémité est montée sur la platine 35 par une liaison pivot 39 d'axe perpendiculaire à la platine 35 (axe vertical une fois la cale 21 placée sur la poutre 22). La liaison pivot 39, bien connue, peut être réalisée sous toute forme appropriée.

Enfin, des première et seconde butées respectivement 40 et 41 sont prévues sur la platine 35. La première butée 40 consiste en une petite plaque verticale soudée sur la platine 35 et présentant un bord vertical 42 (Figure 13) tourné dans une direction orthogonale aux faces des ailes 34, tandis que la seconde butée 41 est formée par un bord vertical 43 de la partie supérieure d'une aile 34, laquelle partie supérieure est à angle droit avec la première butée 40. La première butée 40 est ainsi agencée pour former une butée en rotation pour la barre d'arrêt 38 dans le sens de rotation correspondant au sens d'arc-boutement en position d'arrêt de la cale 21 (Figure 10), tandis que la seconde butée 41 forme une butée en rotation dans le sens opposé et dans une position de non-utilisation de la cale 21, dans laquelle la barre d'arrêt 39 est parallèle à la poutre 22.

Le fonctionnement du dispositif selon cette variante de réalisation est le suivant.

Après que le camion est en stationnement, l'opérateur dispose la cale 21, dont la barre d'arrêt 38 est en position de non-utilisation, devant l'une des roues en la faisant coulisser le long de la poutre 22, et en cas de déplacement du camion à l'opposé du quai, la cale 21 sera rendue automatiquement solidaire de la poutre 22 par arc-boutement, le déplacement de la poutre 22 dans le sens d'arc-boutement étant empêché/limité par l'action du ressort 32.

Lorsque l'opérateur souhaite placer la cale 21 dans la position de non-utilisation, il lui suffit de tout d'abord commander le moteur 29 pour faire tourner la tige filetée 27 dans le sens dans lequel le coulisseau 33 sera déplacé en translation à l'encontre de l'action du ressort 32 et comprimera ce dernier par l'intermédiaire de la plaque de poussée 30. Celle-ci étant solidaire de la poutre 22, la translation du coulisseau 33 entraînera une translation de la poutre 22, et donc de la cale 21, dans le sens d'arc-boutement, ce qui permettra de relâcher la pression exercée par la roue sur la cale 21. L'opérateur pourra alors désolidariser la cale 21 de la poutre 22 et faire coulisser manuellement la cale 21 à l'opposé de ladite roue puis faire pivoter manuellement la barre d'arrêt 38 jusqu'à l'amener en butée contre la seconde butée 41, comme représenté sur la Figure 13. La cale 21 se trouve alors en position de non-utilisation et le camion pourra sortir de l'emplacement de chargement/déchargement.

On constate donc que, dans le premier mode de réalisation et sa variante décrits ci-dessus, le montage en translation de l'ensemble poutre par rapport au support permet un relâchement de la pression exercée sur la cale et qui empêchait l'opérateur de retirer la cale ou de faire pivoter la barre d'arrêt vers la position de non-utilisation.

Si l'on se réfère maintenant à la Figure 14, on peut voir que l'on y a représenté un second mode de réalisation du dispositif selon la présente invention, dont seule une partie est représenté.

Un dispositif 44 selon le second mode de réalisation comprend un bâti consistant en une poutre 45 immobile solidaire du sol, par exemple par l'intermédiaire d'un support (non représenté), avec laquelle vient coopérer une cale 46 d'une manière telle que la cale 46 peut être bloquée en position devant une roue d'un camion.

Ici, la cale 46 se bloque par arc-boutement sur la poutre 45 d'une manière analogue à celle décrite ci-dessus, la cale 46, représentée schématiquement, étant analogue à la cale 21 et comprenant ainsi quatre ailes 47 qui s'étendent vers le bas à partir d'une platine 48 sur le côté opposé de laquelle s'étend à la verticale une tige filetée 49 sur laquelle est enfilée, par un trou traversant, une région d'extrémité d'une barre d'arrêt 50.

La barre d'arrêt 50 est montée librement rotative sur la tige filetée 49, et peut donc être déplacée manuellement par l'opérateur entre une position d'arrêt, dans laquelle elle s'étend perpendiculairement à la poutre 45 pour s'opposer au mouvement d'une roue, et une position de non-utilisation, dans laquelle elle a été tournée pour s'étendre parallèlement à la poutre 45 et au-dessus de celle-ci.

La barre 50 est maintenue dans la position d'arrêt par le serrage d'un écrou 51 enfilé sur la tige filetée 49 pour venir appuyer sur le dessus de la barre 50 de telle sorte que cette dernière est bloquée en rotation par serrage entre l'écrou 51 et la platine 48. Deux petites tiges de manoeuvre 52 s'étendent radialement à partir de l'écrou 51 pour permettre à l'opérateur d'appliquer un couple de serrage suffisant pour obtenir un blocage de la rotation de la barre 50.

Une fois que la cale 46 est bloquée par arc-boutement sur la poutre 45 par l'action d'une roue sur la barre 50 maintenue dans la position d'arrêt par l'écrou 51, un opérateur souhaitant libérer la cale 46 doit simplement desserrer l'écrou 51 pour autoriser la barre 50 à pivoter par rapport à l'axe de la tige 49 sous l'action de la roue. Le desserrage a pour effet de relâcher la pression exercée par la roue sur la cale 46 et de faire ainsi disparaître la force qui a conduit à la solidarisation par arc-boutement. La barre 50 sera alors déplacée jusqu'à sa position de non-utilisation, par l'opérateur, et l'opérateur pourra éventuellement déplacer en translation la cale 46 jusqu'à une extrémité de la poutre 45 en vue de sa prochaine utilisation.

On souligne ici que le principe du troisième mode de réalisation décrit ci-dessus peut être appliqué à un ensemble poutre monté de façon déplaçable en translation avec la disposition de moyens permettant de solliciter en permanence l'ensemble poutre dans le sens opposé au sens d'arc-boutement pour appliquer sur la roue une poussée suffisante pour s'assurer que l'arrière du véhicule est en appui contre un quai de chargement.

On constate donc que le dispositif de cale d'immobilisation selon la présente invention est simple, facile à installer et peu coûteux, et permet de placer manuellement la cale dans une position de non-utilisation, dans laquelle elle ne s'oppose plus au déplacement du camion, même lorsque la cale est coincée et ne peut plus être déplacée manuellement, du fait que la position de la roue calée a changé, par exemple en raison de la différence de chargement du camion entre son arrivée au quai et son départ de celui-ci.

Il est bien entendu que le mode de réalisation ci-dessus de la présente invention a été donné à titre indicatif et non limitatif et que des modifications pourront y être apportées sans que l'on s'écarte pour autant du cadre de la présente invention.

## Revendications

1. Dispositif (1 ; 18 ; 44) de cale d'immobilisation d'un véhicule dans un emplacement de chargement/déchargement, comprenant un bâti (5, 3 ; 5, 20 ; 45) et une cale manuelle (4 ; 21 ; 46), le bâti (5, 3 ; 5, 20 ; 45) étant destiné à être fixé au sol, au voisinage de l'emplacement de chargement/déchargement, et comprenant une structure (3 ; 20 ; 45) de support de cale, et la cale (4 ; 21 ; 46) ayant une partie d'arrêt (12 ; 38 ; 50) portée par une partie (13 ; 34, 35 ; 47, 48) de liaison à la structure de support de cale (3 ; 20 ; 45), la cale (4 ; 21 ; 46) étant apte à être placée manuellement et de manière sélective dans une position dite de non-utilisation, dans laquelle la partie d'arrêt (12 ; 38 ; 50) laisse libre l'emplacement de chargement/déchargement, ou dans une position dite d'arrêt, dans laquelle la partie d'arrêt (12 ; 38 ; 50) s'étend dans l'emplacement de chargement/déchargement pour former un arrêt contre lequel vient buter et exercer une pression une roue d'un véhicule qui a été placé dans l'emplacement de chargement/déchargement, étant en outre prévus des moyens de solidarisation pour rendre la partie de liaison (13 ; 34, 35 ; 47, 48) solidaire de la structure de support de cale (3 ; 20 ; 45) lorsque la cale (4 ; 21 ; 46) est dans la position d'arrêt, de façon à ainsi empêcher le véhicule de se déplacer à l'encontre de la partie d'arrêt (12 ; 38 ; 50), le dispositif de cale d'immobilisation (1 ; 18 ; 44) étant **caractérisé par le fait que** la partie de liaison (13 ; 34, 35 ; 47, 48) est manuellement désolidarisable de la structure de support de cale (3 ; 20 ; 45) afin de permettre à la cale (4 ; 21 ; 46) d'être placée manuellement dans la position de non-utilisation, la partie d'arrêt (12 ; 38 ; 50) est déplaçable vis-à-vis de ladite roue, à partir de la position d'arrêt et avec la partie de liaison (13 ; 34, 35 ; 47, 48) qui reste solidaire de la structure de support de cale (3 ; 20 ; 15), dans une direction correspondant à la direction de la pression exercée par ladite roue, ce qui permet de relâcher, le cas échéant, la pression exercée sur la partie d'arrêt (12 ; 38 ; 50) conduisant à un blocage des moyens de solidarisation empêchant la partie de liaison (13 ; 34, 35 ; 47, 48) d'être désolidarisée de la structure de support de cale (3 ; 20 ; 45) et en conséquence le placement manuel de la cale (4, 21, 46) dans la position de non-utilisation.

2. Dispositif de cale d'immobilisation (1 ; 18 ; 44) selon la revendication 1, **caractérisé par le fait que** la structure de support de cale (3 ; 20 ; 45) est un ensemble poutre (3 ; 20 ; 45) relié à un support (2, 5) destiné à être fixé au sol.

3. Dispositif de cale d'immobilisation (1 ; 18 ; 44) selon la revendication 2, **caractérisé par le fait que** la partie de liaison (13 ; 34, 35 ; 47, 48) porte des moyens de solidarisation par arc-boutement sur l'ensemble poutre (3 ; 20 ; 45), constituant les moyens de solidarisation de la partie de liaison (13 ; 34, 35 ; 47, 48) sur l'ensemble poutre (3 ; 20 ; 45), pour maintenir la cale (4 ; 21 ; 46) immobile par rapport à l'ensemble poutre (3 ; 20 ; 45) lorsqu'une pression parallèle à la direction longitudinale de l'ensemble poutre (3 ; 20 ; 45) et orientée dans le sens d'arc-boutement est exercée sur la partie d'arrêt (12 ; 38 ; 50), bloquant ainsi en position le dispositif de cale d'immobilisation (1 ; 18 ; 44).

4. Dispositif de cale d'immobilisation (1 ; 18) selon l'une des revendications 2 et 3, **caractérisé par le fait que** l'ensemble poutre (3 ; 20) est déplaçable en translation par rapport au support (2, 5) dans la direction longitudinale de l'ensemble poutre (3 ; 20), étant le cas échéant prévus des moyens (10, 11 ; 32) de limitation du déplacement de l'ensemble poutre (3 ; 20) lors de l'application de ladite pression par une roue, la désolidarisation de la partie de liaison (13 ; 34, 35) vis-à-vis de l'ensemble poutre (3 ; 20) étant obtenue par translation de l'ensemble poutre (3 ; 20) suivant la direction longitudinale de l'ensemble poutre (3 ; 20) et dans le sens d'arc-boutement.

5. Dispositif de cale d'immobilisation (18) selon la revendication 4, **caractérisé par le fait que** lesdits moyens de limitation (32) du déplacement de l'ensemble poutre (20) comprennent au moins un ressort de compression (32) monté entre une partie fixe (30) solidaire du support (2, 5) et une plaque de poussée (26) solidaire de l'ensemble poutre (20), de telle sorte que le ou chaque ressort (32) prend appui sur la partie fixe (30) et exerce sur la plaque de poussée (26) une poussée dans un sens opposé au sens d'arc-boutement.

6. Dispositif de cale d'immobilisation (1 ; 18) selon l'une des revendications 4 et 5, **caractérisé par le fait qu'**il comprend en outre des moyens de commande du déplacement en translation de l'ensemble poutre (3 ; 20) pour la désolidarisation de la partie de liaison (13 ; 34, 35), lesquels moyens de commande comprennent avantageusement, le cas échéant, une tige filetée (27) à l'intérieur de l'ensemble poutre (3 ; 20) qui consiste en une poutre creuse (8 ; 22), laquelle tige (27) s'étend dans la direction longitudinale de l'ensemble poutre (3 ; 20), est montée de façon à pouvoir tourner autour de son axe sous l'action de moyens d'entraînement en rotation (29) et passe à travers ladite plaque de poussée (26), un coulisseau (33) muni d'un trou taraudé étant enfilé sur la tige (27) pour venir en appui contre la plaque de poussée (26), côté opposé au ou aux ressorts (32), et bloqué en rotation de telle sorte qu'une rotation de la tige (27) dans un sens donné entraîne un déplacement en translation du coulisseau (33), et donc de l'ensemble poutre (3 ; 20), à l'encontre de l'action du ou des ressorts (32).

7. Dispositif de cale d'immobilisation (44) selon l'une des revendications 1 à 3, **caractérisé par le fait que** la partie d'arrêt (50) de la cale (46) est reliée à la partie de liaison (47, 48) à rotation libre selon un axe de rotation qui est vertical lorsque la partie d'arrêt (50) est en position d'arrêt, la partie d'arrêt (50) étant déplaçable entre la position d'arrêt et la position de non-utilisation par rotation autour dudit axe de rotation, étant prévus des moyens de blocage sélectif (51) de la partie d'arrêt (50) dans la position d'arrêt.

8. Dispositif de cale d'immobilisation (44) selon la revendication 7, **caractérisé par le fait que** lesdits moyens de blocage (51) de la partie d'arrêt (50) dans la position d'arrêt comprennent des moyens de blocage par serrage (51) de la partie d'arrêt (50) contre la partie de liaison (47, 48).

9. Dispositif de cale d'immobilisation (1 ; 18 ; 44) selon l'une des revendications 1 à 8, destiné à immobiliser un véhicule dans un emplacement de chargement/déchargement avec l'arrière du véhicule au contact d'un quai de chargement/déchargement, notamment par l'intermédiaire d'un niveleur de quai et de butoirs, **caractérisé par le fait qu'**il comprend des moyens d'application de poussée (10, 11 ; 32) pour appliquer en permanence sur la roue, par l'intermédiaire de la cale (4 ; 21 ; 46), une poussée permettant à l'arrière du véhicule d'être en appui sur ledit quai tout au long d'une opération de chargement/déchargement, et non en simple contact avec ce dernier.

10. Dispositif (1 ; 18 ; 44) selon la revendication 9, **caractérisé par le fait que** les moyens d'application de poussée (10, 11 ; 32) sont configurés pour appliquer une poussée d'une valeur minimale de 1000 N.

11. Dispositif (18) selon l'une des revendications 9 et 10, prises en dépendance de l'une des revendications 4 à 6, **caractérisé par le fait que** les moyens d'application de poussée (32) comprennent au moins un ressort de compression (32) monté entre une partie fixe (30) solidaire du support (2, 5) et une plaque de poussée (26) solidaire de l'ensemble poutre (20), de telle sorte que le ou chaque ressort (32) prend appui sur la partie fixe (30) et exerce sur la plaque de poussée (26) une poussée dans un sens orienté vers le quai de chargement/déchargement, lesquels moyens d'application de poussée constituant ainsi, le cas échéant, également les moyens de limitation du déplacement de l'ensemble poutre (20).

## Patentansprüche

1. eilvorrichtung als Wegfahrsperre für ein Fahrzeug (1; 18 ; 44) an einem Be-/Entladeort, die ein Gestell (5, 3 ; 5, 20, 45) umfasst und einen manuellen Keil (4 ; 21 ; 46), wobei das Gestell (5, 3 ; 5, 20 ; 45) am Boden zu befestigen ist, in der Nähe des Be-/Entladeorts, und die Struktur (3 ; 20 ; 45) einer Keilstütze umfasst, und der Keil (4 ; 21 ; 46) umfasst ein Halteteil (12 ; 38 ; 50), das von einem Teil (13 ; 34, 35 ; 47, 48) zur Verbindung mit der Keilstützstruktur (3 ; 20 ; 45) getragen wird, wobei der Keil (4 ; 21 ; 46) geeignet ist, manuell und selektiv in einer Position platziert zu werden, die Nichtnutzung genannt wird, in der das Halteteil (12 ; 38 ; 50) den Be-/Entladeort freilässt, oder in einer Position genannt Halteposition, in der das Halteteil (12 ; 38 ; 50) sich in dem Be-/Entladeort erstreckt, um einen Halt zu bilden, gegen den ein Rad eines Fahrzeugs, das in dem Be-/Entladeort platziert wurde, anschlägt und einen Druck ausübt, wobei außerdem Verbindungsmittel vorgesehen sind, um den Verbindungsteil (13 ; 34, 35 ; 47, 48) mit der Keilstützstruktur (3 ; 20 ; 45) zu verbinden, wenn der Keil (4 ; 21 ; 46) in Ruhestellung ist, um so das Fahrzeug daran zu hindern, sich entgegen dem Halteteil (12 ; 38 ; 50) zu bewegen, wobei die Keilvorrichtung als Wegfahrsperre (1 ; 18 ; 44) **dadurch gekennzeichnet ist, dass** das Verbindungsteil (13 ; 34, 35 ; 47, 48) manuell von der Keilstützstruktur (3 ; 20 ; 45) lösbar ist, damit der Keil (4 ; 21 ; 46) manuell in der Nichtnutzungsposition platziert werden kann, wobei das Halteteil (12 ; 38 ; 50) gegenüber besagtem Rad verschiebbar ist, ausgehend von der Halteposition und mit dem Verbindungsteil (13 ; 34, 35 ; 47, 48) das mit der Keilstützstruktur (3 ; 20, 15) verbunden bleibt, in einer Richtung entsprechend der Richtung des von dem Rad ausgeübten Drucks, was es gestattet, gegebenenfalls den auf das Halteteil (12 ; 38 ; 50) ausgeübten Druck freizugeben, was zu einer Blockierung der Verbindungsmittel führt, die verhindert, dass das Verbindungsteil (13 ; 34, 35 ; 47, 48) von der Keilstützstruktur (3 ; 20 ; 45) losgelöst wird, und in der Folge die manuelle Platzierung des Keils (4 ; 21 ; 46) in der Nichtnutzungsposition.

2. Keilvorrichtung als Wegfahrsperre (1 ; 18 ; 44) nach Anspruch 1, **gekennzeichnet dadurch dass** die Keilstützstruktur (3 ; 20 ; 45) eine Trägereinheit (3 ; 20 ; 45) ist, die mit einem am Boden zu befestigenden Träger (2, 5) verbunden ist.

3. Keilvorrichtung als Wegfahrsperre (1 ; 18 ; 44) nach Anspruch 2, **gekennzeichnet dadurch, dass** das Verbindungsteil (13 ; 34, 35 ; 47, 48) Mittel zur Verbindung durch Selbsthemmung auf der Trägereinheit (3 ; 20 ; 45) trägt, die die Verbindungsmittel des Verbindungsteils (13 ; 34, 35 ; 47, 48) auf der Trägereinheit (3 ; 20 ; 45) bilden um den Keil (4 ; 21 ; 46) unbeweglich im Vergleich zu der Trägereinheit (3 ; 20 ; 45) zu halten, wenn ein zur Längsrichtung der Trägereinheit (3 ; 20 ; 45) paralleler Druck, ausgerichtet in Richtung der Selbsthemmung, auf das Halteteil (12 ; 38 ; 50) ausgeübt wird, und so die Keilvorrichtung als Wegfahrsperre (1 ; 18 ; 44) in Position blockiert.

4. Keilvorrichtung als Wegfahrsperre (1 ; 18) nach einem der Ansprüche 2 und 3, **gekennzeichnet dadurch, dass** die Trägereinheit (3 ; 20) im Verhältnis zum Träger (2, 5) in der Längsrichtung der Trägereinheit (3 ; 20) verschiebbar ist, wobei gegebenenfalls Mittel (10 ; 11 ; 32) zur Begrenzung der Bewegung der Trägereinheit (3 ; 20) bei der Aufbringung des besagten Drucks durch ein Rad vorgesehen sind, wobei die Entkopplung des Verbindungsteils (13 ; 34 ; 35) von der Trägereinheit (3 ; 20) durch Verschiebung der Trägereinheit (3 ; 20) in Längsrichtung der Trägereinheit (3 ; 20) und in Richtung der Selbsthemmung erhalten wird.

5. Keilvorrichtung als Wegfahrsperre (18) nach Anspruch 4, **gekennzeichnet dadurch, dass** die Begrenzungsmittel (32) der Bewegung der Trägereinheit (20) mindestens eine Druckfeder (32) umfassen, die zwischen einem festen Teil (30), der mit dem Träger (2, 5) verbunden ist, und einer Schubplatte (26), die mit der Trägereinheit (20) verbunden ist, montiert ist, so dass die oder jede Feder (32) sich auf den festen Teil (30) stützt und auf die Schubplatte (26) einen Schub in einer Richtung entgegen der Richtung der Selbsthemmung ausübt.

6. Keilvorrichtung als Wegfahrsperre (1 ; 18) nach einem der Ansprüche 4 und 5, **gekennzeichnet dadurch, dass** sie außerdem Steuermittel der Bewegung der Trägereinheit (3 ; 20) zur Entkopplung des Verbindungsteils (13 ; 34 ; 35) umfasst, wobei die Steuermittel vorteilhafterweise gegebenenfalls einen Gewindeschaft (27) in der Trägereinheit (3 ; 20) umfassen, die aus einem hohlen Träger (8 ; 22) besteht, wobei der Schaft (27) sich in Längsrichtung der Trägereinheit (3 ; 20) erstreckt, montiert ist, um sich um seine Achse drehen zu können, unter der Einwirkung von rotierenden Antriebsmitteln (29), und durchquert die Schubplatte (26), wobei ein Schieber (33), ausgestattet mit einer Gewindebohrung, auf dem Schaft (27) eingesteckt ist, um gegen die Schubplatte (26) in Anlage zu kommen, an der Seite gegenüber der oder den Feder(n) (32), und blockiert rotierend derart, dass ein Rotation des Schafts (27) in einer gegebenen Richtung zu einer Bewegung des Schiebers (33) und somit der Trägereinheit (3 ; 20) führt, entgegen der Wirkung der Feder(n) (32).

7. Keilvorrichtung als Wegfahrsperre (44) nach einem der Ansprüche 1 bis 3, **gekennzeichnet dadurch, dass** das Halteteil (50) für den Keil (46) mit dem Verbindungsteil (47 ; 48) in freier Rotation um eine Drehachse verbunden ist, die senkrecht ist, wenn das Halteteil (50) in Halteposition ist, wobei das Halteteil (50) zwischen der Halteposition und der Nichtnutzungsposition durch Rotation um die Drehachse verschiebbar ist, wobei selektive Blockierungsmittel (51) für das Halteteil (50) in der Halteposition vorgesehen sind.

8. Keilvorrichtung als Wegfahrsperre (44) nach Anspruch 7, **gekennzeichnet dadurch, dass** die Blockierungsmittel (51) für das Halteteil (50) in der Halteposition Mittel zur Blockierung durch Festklemmen (51) des Halteteils (50) gegen das Verbindungsteil (47, 48) umfassen.

9. Keilvorrichtung als Wegfahrsperre (1 ; 18 ; 44) nach einem der Ansprüche 1 bis 8, um ein Fahrzeug an einem Be-/Entladeort mit der Hinterseite des Fahrzeugs in Kontakt mit einer Be-/Entladerampe zu immobilisieren, vor allem mittels einer Überfahrbrücke und Anschlägen, **gekennzeichnet dadurch, dass** er Schubaufbringungsmittel (10, 11 ; 32) umfasst, um ständig auf das Rad mittels des Keils (4 ; 21 ; 46) einen Schub aufzubringen, so dass das hintere Teil des Fahrzeugs während einer Be-/Entladeoperation auf der Rampe aufliegt und nicht nur einfach in Kontakt mit letzterer steht.

10. Vorrichtung (1 ; 18 ; 44) nach Anspruch 9, **gekennzeichnet dadurch, dass** die Schubaufbringungsmittel (10, 11 ; 32) gestaltet sind, um einen Schub mit einem Mindestwert von 1000 N aufzubringen.

11. Vorrichtung (18) nach einem der Ansprüche 9 und 10, abhängig von einem der Ansprüche 4 bis 6, **gekennzeichnet dadurch, dass** die Schubaufbringungsmittel (32) mindestens eine Druckfeder (32) umfassen, die zwischen ein festes Teil (30), das mit dem Träger verbunden ist (2, 5), und eine Schubplatte (26), die mit der Trägereinheit (20) verbunden ist, montiert ist, so dass die oder jede Feder (32) sich auf den festen Teil (30) stützt und auf die Schubplatte (26) einen Schub in Richtung der Be-/Entladerampe ausübt, wobei die Schubaufbringungsmittel so gegebenenfalls auch die Begrenzungsmittel der Bewegung der Trägereinheit (20) bilden.

## Claims

1. A wedge device (1; 18; 44) for immobilising a vehicle in a loading/unloading location, comprising a frame (5, 3; 5, 20; 45) and a manual wedge (4; 21; 46), wherein the frame (5, 3; 5, 20; 45) is intended to be fixed to the ground, at the vicinity of the loading/unloading location, and comprising a wedge support structure (3; 20; 45), and wherein the wedge (4; 21; 46) has a stop part (12; 38; 50) carried by a connecting part (13; 34, 35; 47, 48) for connecting to the wedge support structure (3; 20; 45), wherein the wedge (4; 21; 46) can be manually and selectively placed in a so-called non-use position, in which the stop part (12; 38; 50) leaves clear the loading/unloading location, or in a so-called stop position, in which the stop part (12; 38; 50) extends in the loading/unloading location to form a stop against which abuts and applies a pressure a wheel of a vehicle which has been arranged in the loading/unloading location, wherein are also provided securing means to make the connecting part (13; 34, 35; 47, 48) integral with the wedge support structure (3; 20; 45) when the wedge (4; 21; 46) is in the stop position, so as to prevent the vehicle from moving against the stop part (12; 38; 50), the immobilising wedge device (1; 18; 44) being **characterised by** the fact that the connecting part (13; 34, 35; 47, 48) is manually separable from the wedge support structure (3; 20; 45) so as to allow the wedge (4; 21; 46) to be manually placed in the non-use position, the stop part (12; 38; 50) is moveable with respect to said wheel, from the stop position and with the connecting part (13; 34, 35; 47, 48) remaining integral with the wedge support structure (3; 20; 45), in a direction corresponding to the direction of the pressure applied by said wheel, thereby allowing to release, as the case may be, the pressure applied on the stop part (12; 38; 50) that causes a blockage of the securing means which prevents the connecting part (13; 34, 35; 47, 48) from being separated from the wedge support structure (3; 20; 45) and, therefore, the manual placement of the wedge (4, 21, 46) in the non-use position.

2. The immobilising wedge device (1; 18; 44) according to claim 1, **characterised by** the fact that the wedge support structure (3; 20; 45) is a beam assembly (3; 20; 45) connected to a support (2, 5) intended to be fixed to the ground.

3. The immobilising wedge device (1; 18; 44) according to claim 2, **characterised by** the fact that the connecting part (13; 34, 35; 47, 48) carries means for securing by bracing on the beam assembly (3; 20; 45), constituting the means for securing the connecting part (13; 34, 35; 47, 48) on the beam assembly (3; 20; 45), in order to maintain the wedge (4; 21; 46) stationary with respect to the beam assembly (3; 20; 45) when a pressure parallel to the longitudinal direction of the beam assembly (3; 20; 45) and directed in the bracing direction is applied on the stop part (12; 38; 50), thereby blocking in position the immobilising wedge device (1; 18; 44).

4. The immobilising wedge device (1; 18) according to one of claims 2 and 3, **characterised by** the fact that the beam assembly (3; 20) is translatable with respect to the support (2, 5) in the longitudinal direction of the beam assembly (3; 20), wherein are provided, if appropriate, means (10, 11; 32) for limiting the movement of the beam assembly (3; 20) upon application of said pressure by a wheel, the separation of the connecting part (13; 34, 35) from the beam assembly (3; 20) being obtained by translation of the beam assembly (3; 20) along the longitudinal direction of the beam assembly (3; 20) and in the bracing direction.

5. The immobilising wedge device (18) according to claim 4, **characterised by** the fact that said means (32) for limiting the movement of the beam assembly (20) comprise at least one compression spring (32) mounted between a stationary part (30) integral with the support (2, 5) and a push plate (26) integral with the beam assembly (20), such that the or each spring (32) bears on the stationary part (30) and applies on the push plate (26) a push in a direction opposite to the bracing direction.

6. The immobilising wedge device (1; 18) according to one of claims 4 and 5, **characterised by** the fact that it further comprises means for controlling the translation movement of the beam assembly (3; 20) for the separation of the connecting part (13; 34, 35), which control means advantageously comprise, if appropriate, a threaded rod (27) within the beam assembly (3; 20) which consists in a hollow beam (8; 22), which rod (27) extends in the longitudinal direction of the beam assembly (3; 20), is mounted so as to be rotatable around its axis under the action of rotation driving means (29), and passes through said push plate (26), wherein a slide (33) provided with a drilled hole is fitted on the rod (27) so as to come to bear against the push plate (26), on the side opposed to the spring (s) (32), and blocked in rotation such that a rotation of the rod (27) in a given direction causes a translation of the slide (33), and thus of the beam assembly (3; 20), against the action of the spring(s) (32).

7. The immobilising wedge device (44) according to one of claims 1 to 3, **characterised by** the fact that the stop part (50) of the wedge (46) is connected with the connecting part (47, 48) so as to be freely rotatable along a rotation axis which is vertical when the stop part (50) is in the stop position, wherein the stop part (50) is moveable between the stop position and the non-use position by rotation around said rotation axis, wherein are provided means (51) for selectively blocking the stop part (50) in the stop position.

8. The immobilising wedge device (44) according to claim 7, **characterised by** the fact that said means (51) for blocking the stop part (50) in the stop position comprise means (51) for blocking by clamping the stop part (50) against the connecting part (47, 48).

9. The immobilising wedge device (1; 18; 44) according to one of claims 1 to 8, intended to immobilise a vehicle in a loading/unloading location with the rear part of the vehicle contacting a loading/unloading dock, for example via a leveling device and stoppers, **characterised by** the fact that it comprises push-applying means (10, 11; 32) for continuously applying on the wheel, via the wedge (4; 21; 46), a push allowing the rear part of the vehicle to abut on said dock throughout a loading/unloading operation, and not with simple contact with the latter.

10. The device (1; 18; 44) according to claim 9, **characterised by** the fact that the push-applying means (10, 11; 32) are configured to apply a push of a minimum value of 1,000N.

11. The device (18) according to one of claims 9 and 10, when dependent on one of claims 4 to 6, **characterised by** the fact that the push-applying means (32) comprise at least one compression spring (32) mounted between a stationary part (30) integral with the support (2, 5) and a push plate (26) integral with the beam assembly (20), such that the or each spring (32) bears on the stationary part (30) and applies on the push plate (26) a push in a direction directed towards the loading/unloading dock, which push-applying means thus constituting, if appropriate, also the means for limiting the movement of the beam assembly (20).
